# EUROPÄISCHE PATENTSCHRIFT

(11) **EP 1 790 499 B1**
(45) Veröffentlichungstag und Bekanntmachung des Hinweises auf die Patenterteilung: **07.10.2009**
(21) Anmeldenummer: 06090197.2
(22) Anmeldetag: 25.10.2006
(51) Int. Cl.: B60B 3/04, B60B 3/10

(54) **Radscheibe**
Wheel disc
Disque de roue

(30) Priorität: 25.11.2005 DE 102005057275
(43) Veröffentlichungstag der Anmeldung: 30.05.2007
(73) Patentinhaber: Kronprinz GmbH, 42697 Solingen (DE)
(72) Erfinder: Fischbacher, Alfred, 83101 Rohrdorf (DE); Bönning, Meinhard, 42697 Solingen (DE); Kruchten, Wolfgang, 42113 Wuppertal (DE)
(74) Vertreter: Meissner, Peter E.

(56) Entgegenhaltungen:
- EP-A2- 1 262 333
- WO-A-03/037651
- WO-A-03/043836
- WO-A-03/047882
- DE-A1-102005 019 457

## Beschreibung

Die Erfindung betrifft eine Radscheibe, insbesondere für Personenkraftwagen,
- die einstückig aus einem tiefgezogenen Blech hergestellt ist, mit einem kreisförmig, radial äußeren Montagebereich, der mit der Felge verbunden wird,
- einem radial inneren Bereich für die Befestigung und Zentrierung an einer Radnabe mit einem Auflagebereich, welcher eine vorgegebene Anzahl von Bolzenlöchern aufweist und radial innen durch einen axial nach außen gebogenen Rand oder Zentrierstutzen abschließt,
- und Speichen, die den Innenbereich und den Außenbereich verbinden und Öffnungen umschließen.

Eine derartige Radscheibe ist beispielsweise aus der gattungsgemäßen WO 03/043836 A bekannt.

Hierbei ist zur mechanischen Verstärkung der Speichen bei jeder Speiche eine mittige Vertiefung vorgesehen, die vom Zentrierstutzen ausgehend, das Bolzenloch einschließend, sich bis zum äußeren Montagebereich erstreckt.

Ferner sind die äußeren Flächen jeder Speiche mit dem Zentrierstutzen über ein Halteböckchen verbunden, das relativ zum Auflagebereich axial nach außen versetzt ist. Nachteilig an dieser Lösung ist, dass der mechanische Kraftfluss von der Felge zur Verschraubung an der Radnabe des Fahrzeugs durch den zentralen Bereich der Speiche verläuft, der im wesentlichen ohne Versteifungselemente ausgeführt ist. In Folge muss ein relativ dickes Blech als Material eingesetzt werden, um den Betriebsbeanspruchungen gerecht zu werden.

Gleiches gilt auch für eine Lösung wie aus EP 1 262 333 B1 bekannt. Dort ist der Kraftfluss durch die Speichenmitte sogar durch eine Öffnung in der Speiche behindert. In Konsequenz muss auch bei dieser Lösung eine hohe Blechstärke eingesetzt werden.

Diese relativ hohe Blechstärke der beiden genannten Lösungen wiederum erschwert die Herstellung der Radscheibe, da beim Tiefziehen dicker Bleche höhere Kräfte erforderlich sind und nur größere Biegeradien erzeugt werden können, als bei Verwendung dünnerer Bleche.

Auch die Ausbildung des bis auf das Niveau der Radnabe heruntergezogenen Bereichs zwischen Speiche und Befestigungsloch in beiden genannten Lösungen erschwert die Herstellung der Radscheibe und behindert den Kraftfluss. Eine weitere bekannte Lösung mit einer Speichenanordnung mit einer ausgeprägten Mittelrippe zur Versteifung der Speiche ist auch bekannt aus EP 1 453 687. Nachteilig ist hier aber, dass die Speichen den Außenbereich mit dem Innenbereich jeweils zwischen zwei Befestigungslöchern verbinden. Der Kraftfluss von der Felge zur Radverschraubung wird hier vollständig umgelenkt und erfolgt nicht direkt in Richtung der Speiche.

Der Erfindung liegt die Aufgabe zugrunde, eine Radscheibe zu schaffen, die hinsichtlich des Umformungsverhaltens, insbesondere aber auch des Kraftflusses und der Spannungsverteilung verbessert ist.

Gelöst wird diese Aufgabe erfindungsgemäß bei einer Radscheibe mit den im Oberbegriff des Patentanspruch angegebenen Merkmalen dadurch, dass der mittlere Bereich jeder Speiche eine relativ zur Außenseite der Scheibe axial nach außen vorstehende Rippe aufweist, die sich vom Bereich des Bolzenlochs bis zu einem Abstand vom radial äußeren Montagerand erstreckt,
- und dass das Bolzenloch nur auf einem dem Zentrierstutzen zugewandten Teilumfang von einer Auflagefläche für die Radnabe umgeben ist, während der der Rippe zugewandte Umfang in der Ebene des Bolzenlochs liegt.

### Aus dieser Konstruktion ergeben sich folgende Vorteile:

Der Kraftfluss von der Felge durch die Speiche zum Radanschluss erfolgt über einen zentralen Bereich der Speiche, der durch die axial nach außen vorstehende Rippe versteift wird. Die Spannungsverteilung in der Speiche ändert sich durch diese Lösung vorteilhaft, indem die Randbereiche der Speiche am Belüftungsloch entlastet werden.

Ein weiterer Vorteil ist, dass dieser Kraftfluss wesentlich weniger behindert wird als bei den genannten Lösungen, weder durch zusätzliche Öffnungen in der Speiche, noch durch ein Absenken des Übergangsbereichs bis auf Höhe der Radnabe, noch durch eine Anbindung der Speichen jeweils zwischen zwei Befestigungslöchern. Die so erreichte Vergleichmäßigung des Kraftflusses vermeidet Spannungsspitzen und Spannungskonzentrationen, was wiederum dazu führt, dass eine geringere Blechstärke eingesetzt werden kann mit Vorteilen für die Umformbarkeit und das Gewicht der Radscheibe.

Die Erfindung soll nachfolgend unter Bezug auf die Zeichnungen an einem Ausführungsbeispiel erläutert werden.

Dabei zeigt:

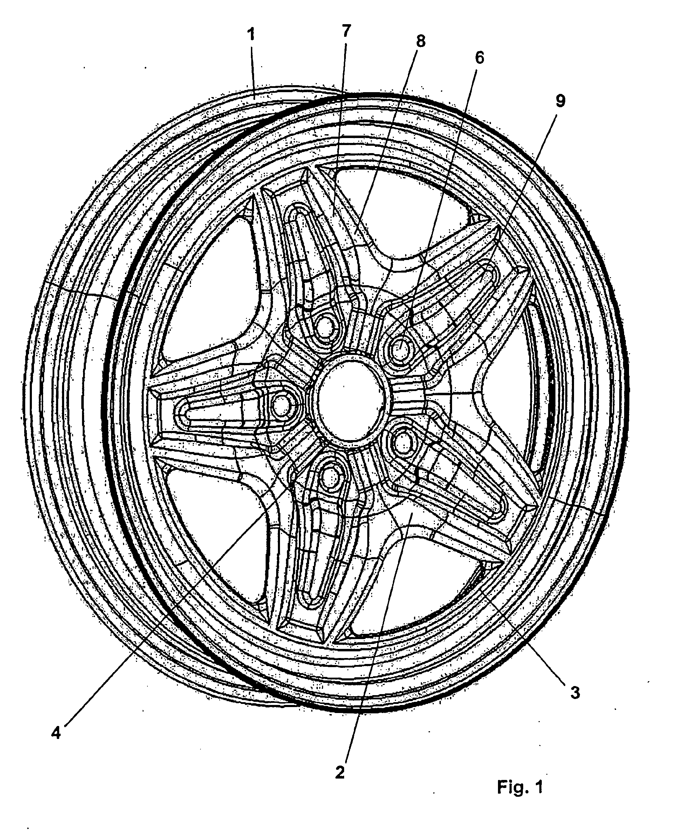

Figur 1 eine perspektivische Ansicht einer Felge mit der erfindungsgemäßen Radscheibe,

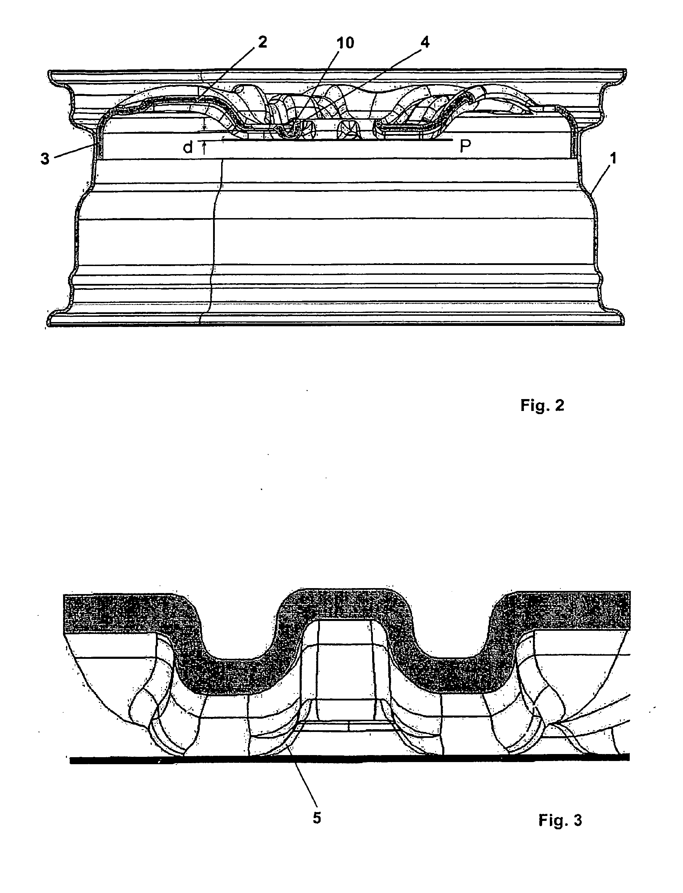

Figur 2 einen Querschnitt durch die Felge und die Radscheibe,
Figur 3 einen Querschnitt durch eine Speiche,
Figur 4 einen Schnitt in Umfangsrichtung durch den Bereich zwischen Speiche und Bolzenloch,
Figur 5 eine perspektivische Ansicht der erfindungsgemäßen Radscheibe und ihrer Kontaktfläche zur nicht dargestellten Radnabe.

In den Figuren ist die Felge mit 1 bezeichnet. Auf die Ausbildung dieser wird hier nicht weiter eingegangen.

Die Radscheibe 2 weist einen kreisförmigen, radial äußeren Montagerand 3 auf, der mit der Felge in bekannter Weise verbunden ist.

Die Felge 1 wird über die Radscheibe 2 mit einer nicht dargestellten Radnabe durch Anschrauben verbunden. Hierzu weist die Radscheibe einen radial inneren Bereich für die Befestigung und Zentrierung auf, wobei der axial nach außen gebogene Rand oder Zentrierstutzen mit 4 bezeichnet ist.

Der Auflagebereich 5 ist mit einer Anzahl von Bolzenlöchern 6 versehen, durch die Bolzen zum Verbinden der Radscheibe und damit der Felge mit der Radnabe eingeschraubt werden.

Zwischen dem radial inneren Bereich und dem radial äußeren Montagerand 3 sind Speichen 7 vorgesehen, deren äußere Flächen mit 8 bezeichnet sind.
Mittig zwischen den äußeren Flächen jeder Speiche, also im zentralen Teil, ist eine erhabene Rippe 9 vorgesehen, die sich vom Bereich des Bolzenlochs in Richtung des äußeren Montagerandes erstreckt und - bei dem gezeigten Ausführungsbeispiel - im Abstand von diesem endet.

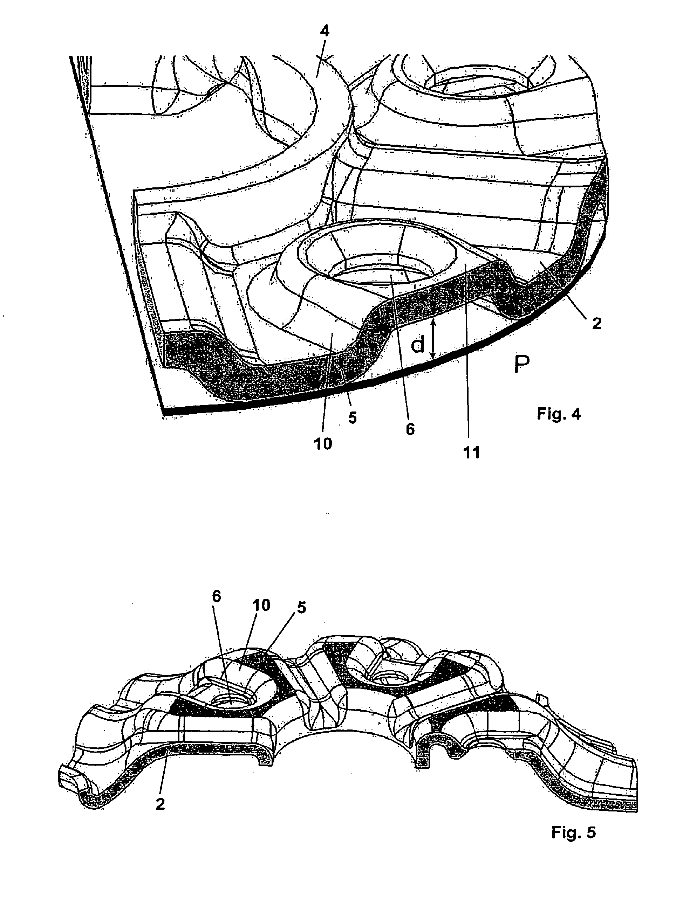

Während bei herkömmlichen Radscheiben der Auflagebereich rund um das jeweilige Bolzenloch ausgebildet ist, d.h. auf das Niveau der Anlagefläche zur Radnabe abgesenkt ist, ist erfindungsgemäß hier nur eine Absenkung auf einem Teilbereich 10 vorgesehen, siehe Figur 5. Dieser Bereich kann als dem Zentrierstutzen zugewandter Teilumfang des Bolzenlochs definiert werden.

Der dem Montagerand zugewandte Umfangsbereich 11 des Bolzenlochs ist nicht abgesenkt, sondern auf einer Höhe d gehalten, die der Ebene des Bolzenlochs entspricht.
Die ist besonders deutlich in der Schnittdarstellung der Figur 4 zu erkennen.

## Patentansprüche

1. Radscheibe (2) insbesondere für Personenkraftwagen,
- die einstückig aus einem tiefgezogenen Blech hergestellt ist, mit einem kreisförmig, radial äußeren Montagebereich (3), der mit der Felge verbunden wird,
- einem radial inneren Bereich für die Befestigung und Zentrierung an einer Radnabe mit einem Auflagebereich (5), welcher eine vorgegebene Anzahl von Bolzenlöchern (6) aufweist und radial innen durch einen axial nach außen gebogenen Rand (4) oder Zentrierstutzen (4) abschließt,
- und Speichen (7), die den Innenbereich und den Außenbereich verbinden und Öffnungen umschließen,
**dadurch gekennzeichnet,**
- **dass** der mittlere Bereich jeder Speiche eine relativ zur Außenseite der Scheibe axial nach außen vorstehende Rippe (9) aufweist, die sich vom Bereich des Bolzenlochs (6) bis mindestens zu einem Abstand vom radial äußeren Montagerand (3) erstreckt,
und **dass** das Bolzenloch (6) nur auf einem dem Zentrierstutzen (4) zugewandten Teilumfang (10) von einer Auflagefläche (5) für die Radnabe umgeben ist, während der der Rippe (9) zugewandte Umfang einen Abstand zur Auflagefläche aufweist.

2. Radscheibe nach Anspruch 1,
**dadurch gekennzeichnet,**
**dass** der der Rippe (9) zugewandte Bereich in der Ebene des Bolzenlochs (6) liegt.

3. Radscheibe nach einem der vorstehenden Ansprüche,
**dadurch gekennzeichnet,**
**dass** sich die Auflagefläche (5)- bezogen auf den Gesamtumfang des Bolzenlochs - über einen Bereich von 180° bis 300° erstreckt.

4. Radscheibe nach einem der vorstehenden Ansprüche,
**dadurch gekennzeichnet,**
**dass** sich die axial nach außen vorstehende Rippe (9) vom Bereich des Bolzenlochs (6) bis zum radial äußeren Montagerand (3) erstreckt.

## Claims

1. A wheel disc (2), in particular for passenger vehicles,
- manufactured in one piece from a deep-drawn metal sheet, having a circular, radially outer mounting region (3) connected to the wheel rim,
- having a radially inner region for securing and centring on a wheel hub by means of a bearing region (5) which has a given number of bolt holes (6) and ends radially at the interior with an axially outwards bent edge (4) or tubular centring means (4),
- and having spokes (7) which connect the inner region and the outer region and enclose openings,
**characterised in that**
- the middle region of each spoke has a rib (9), projecting axially outwards relative to the exterior of the disc, which extends from the region of the bolt hole (6) at least to a distance from the radially outer mounting edge (3),
and **in that** the bolt hole (6) is surrounded only over part (10) of its circumference, facing the tubular centring means (4), by a bearing surface (5) for the wheel hub, while the circumference facing the rib (9) is at a distance from the bearing surface.

2. A wheel disc according to claim 1, **characterised in that** the region facing the rib (9) lies in the plane of the bolt hole (6).

3. A wheel disc according to any one of the preceding claims, **characterised in that** the bearing surface (5) extends over a range of 180° to 300° related to the total circumference of the bolt hole.

4. A wheel disc according to any one of the preceding claims, **characterised in that** the axially outwards projecting rib (9) extends from the region of the bolt hole (6) as far as the radially outer mounting edge (3).

## Revendications

1. Disque de roue (2), en particulier pour voiture particulière,
- fabriqué d'un seul tenant à partir d'une tôle emboutie et comportant une zone de montage extérieure radiale circulaire (3) qui est reliée à la jante,
- comportant une zone intérieure radiale pour la fixation et le centrage au niveau d'un moyeu de roue à l'aide d'une surface d'appui (5), laquelle zone présente un nombre prédéterminé de trous de boulon (6) et se termine radialement à l'intérieur par un bord (4) ou manchon de centrage (4) replié axialement vers l'extérieur
- et comportant des rayons de roue (7) qui relient la zone intérieure et la zone extérieure et entourent des ouvertures,
**caractérisé en ce que** la zone médiane de chaque rayon de roue présente une nervure (9) en saillie s'étendant axialement vers l'extérieur par rapport au côté extérieur du disque, laquelle nervure s'étend depuis la zone du trou de boulon (6) jusqu'à au moins une certaine distance du bord de montage extérieur radial (3) et **en ce que** le trou de boulon (6) n'est entouré, côté manchon de centrage (4), que sur une partie de la circonférence (10) d'une surface d'appui (5) pour la jante, tandis que la circonférence côté nervure (9) présente une certaine distance par rapport à la surface d'appui.

2. Disque de roue selon la revendication 1,
**caractérisé en ce que** la zone côté nervure (9) se trouve dans le plan du trou de boulon (6).

3. Disque de roue selon l'une des revendications précédentes,
**caractérisé en ce que** la surface d'appui (5) s'étend - par rapport à la circonférence totale du trou de boulon - sur une zone comprise entre 180° et 300°.

4. Disque de roue selon l'une des revendications précédentes,
**caractérisé en ce que** la nervure (9) en saillie axialement vers l'extérieur s'étend depuis la zone du trou de boulon (6) jusqu'au bord de montage extérieur radial (3).
